# EUROPEAN PATENT APPLICATION

(11) **EP 4 488 439 A1**
(43) Date of publication of application: **08.01.2025**
(21) Application number: 24721478.6
(22) Date of filing: 15.03.2024
(51) Int. Cl.: D06F 39/08, F16K 15/18, D06F 39/10

(54) **WASHING MACHINE AND CLOTHES TREATING APPARATUS**

(30) Priority: 23.05.2023 KR 20230066585; 11.08.2023 KR 20230105916
(71) Applicant: Samsung Electronics Co., Ltd., Suwon-si, Gyeonggi-do 16677 (KR)
(72) Inventor: HONG, Jaewan, Suwon-si, Gyeonggi-do 16677 (KR); PARK, Jongwon, Suwon-si, Gyeonggi-do 16677 (KR); SEO, Dongpil, Suwon-si, Gyeonggi-do 16677 (KR); CHO, Youngjin, Suwon-si, Gyeonggi-do 16677 (KR); SUNG, Taehyun, Suwon-si, Gyeonggi-do 16677 (KR); LEE, Jaebok, Suwon-si, Gyeonggi-do 16677 (KR)
(74) Representative: Gulde & Partner
(86) International application number: PCT/KR2024/095550
(87) International publication number: WO 2024/242521

(57) **Abstract**

A washing machine comprises a washing machine housing, a tub provided inside the washing machine housing, a drainage device configured to drain water from the tub to the outside of the washing machine housing, and a drain guide configured to guide water discharged from the drainage device. The drain guide includes a guide housing including a guide inlet and a guide outlet, a check valve configured to allow a flow of water from the guide inlet to the guide outlet, and to block a flow of water from the guide outlet to the guide inlet, and an air supply portion configured to supply air to a guide flow path between the guide inlet and the guide outlet. The air supply portion is located on an upper side of the check valve.

## Description

### [Technical Field]

The disclosure relates to a washing machine, and a clothes treating apparatus including a filter device and a washing machine.

### [Background Art]

In general, washing machines are devices that use the driving force of a drive motor to agitate together laundry, water, and detergent placed in a tub, thereby allowing the laundry to be washed by mutual friction.

The processes performed by a washing machine, regardless of the type of washing machine, may include a washing process in which detergent and water are supplied to a tub containing laundry and a drum is rotated to wash the laundry, a rinsing process in which water is supplied to the tub and the drum is rotated to rinse the laundry, and a spin-drying process in which water is drained from the tub and the drum is rotated to remove moisture from the laundry.

The washing machine may also include a drainage device configured to drain water from the tub to the outside of the washing machine when performing the washing process, the rinsing process, and/or the spin-drying process. The drainage device may be configured so that water discharged from the tub may flow back into the tub when performing the washing process and/or the rinsing process.

### [Disclosure]

### [Technical Problem]

The present disclosure is directed to a washing machine and a clothes treating apparatus capable of preventing unintentional draining by siphon.

Further, the present disclosure is directed to a washing machine and a clothes treating apparatus capable of preventing water discharged from a drain hose from flowing back into the washing machine.

Technical tasks to be achieved in this document are not limited to the technical tasks mentioned above, and other technical tasks not mentioned will be clearly understood by those skilled in the art from the description below.

### [Technical Solution]

According to an embodiment of the disclosure, a washing machine includes a washing machine housing, a tub provided inside the housing, a drainage device configured to drain water from the tub to an outside of the housing, and a drain guide configured to guide water discharged from the drainage device. The drain guide includes a guide housing including a guide inlet and a guide outlet, a check valve configured to allow a flow of water from the guide inlet to the guide outlet, and to block a flow of water from the guide outlet to the guide inlet, and an air supply portion configured to supply air to a guide flow path between the guide inlet and the guide outlet. The air supply portion is located on an upper side of the check valve.

According to an embodiment of the disclosure, a clothes treating apparatus includes a washing machine including a washing machine housing, a tub provided inside the washing machine housing, and a drainage device for draining water from the tub to an outside of the washing machine housing, a filter device disposed outside the washing machine housing, the filter device configured to filter out foreign substances from water discharged from the washing machine, and a drain guide configured to guide water discharged from the drainage device to the filter device. The drain guide includes a guide housing including a guide inlet and a guide outlet, a check valve configured to allow a flow of water from the guide inlet to the guide outlet, and to block a flow of water from the guide outlet to the guide inlet, and an air supply portion configured to supply air to a guide flow path between the guide inlet and the guide outlet.

### [Description of Drawings]

FIG. 1 shows a washing machine according to an embodiment of the present disclosure.
FIG. 2 shows a cross-section of the washing machine according to an embodiment of the present disclosure.
FIG. 3 is a control block diagram of the washing machine according to an embodiment of the present disclosure.
FIG. 4 shows a drain guide according to an embodiment of the present disclosure.
FIG. 5 is an exploded view of the drain guide according to an embodiment of the present disclosure.
FIG. 6 shows a cross-section along line A-A' shown in FIG. 4.
FIG. 7 shows a state in which water is drained through the drain guide according to an embodiment of the present disclosure.
FIG. 8 shows a state in which backflow is prevented by the drain guide according to an embodiment of the present disclosure.
FIG. 9 shows a clothes treating apparatus according to an embodiment of the present disclosure.
FIG. 10 shows a cross-section of the clothes treating apparatus according to an embodiment of the present disclosure.
FIG. 11 shows a washing machine according to an embodiment of the present disclosure.
FIG. 12 shows a cross-section of the washing machine according to an embodiment of the present disclosure.
FIG. 13 shows a clothes treating apparatus according to an embodiment of the present disclosure.
FIG. 14 shows a cross-section of the clothes treating apparatus according to an embodiment of the present disclosure.

### [Modes of the Invention]

Various embodiments and the terms used therein are not intended to limit the technology disclosed herein to specific forms, and the disclosure should be understood to include various modifications, equivalents, and/or alternatives to the corresponding embodiments.

In describing the drawings, similar reference numerals may be used to designate similar constituent elements.

A singular expression may include a plural expression unless otherwise indicated herein or clearly contradicted by context.

The expressions "A or B," "at least one of A or/and B," or "one or more of A or/and B," A, B or C," "at least one of A, B or/and C," or "one or more of A, B or/and C," and the like used herein may include any and all combinations of one or more of the associated listed items.

The term of "and / or" includes a plurality of combinations of relevant items or any one item among a plurality of relevant items.

Herein, the expressions "a first", "a second", "the first", "the second", etc., may simply be used to distinguish an element from other elements, but is not limited to another aspect (e.g., importance or order) of elements.

When an element (e.g., a first element) is referred to as being "(functionally or communicatively) coupled," or "connected" to another element (e.g., a second element), the first element may be connected to the second element, directly (e.g., wired), wirelessly, or through a third element.

In this disclosure, the terms "including", "having", and the like are used to specify features, numbers, steps, operations, elements, components, or combinations thereof, but do not preclude the presence or addition of one or more of the features, elements, steps, operations, elements, components, or combinations thereof.

When an element is said to be "connected", "coupled", "supported" or "contacted" with another element, this includes not only when elements are directly connected, coupled, supported or contacted, but also when elements are indirectly connected, coupled, supported or contacted through a third element.

Throughout the description, when an element is "on" another element, this includes not only when the element is in contact with the other element, but also when there is another element between the two elements.

A washing machine according to various embodiments may perform washing, rinsing, spin-drying, and drying processes. The washing machine is an example of a clothes treating apparatus, and the clothes treating apparatus is a concept including an apparatus capable of washing clothes (objects to be washed, and objects to be dried), a device capable of drying clothes, and an apparatus capable of washing and drying clothes.

The washing machine according to various embodiments may include a top-loading washing machine in which a laundry inlet for inserting or withdrawing laundry is provided to face upward, or a front-loading washing machine in which a laundry inlet is provided to face forward. The washing machine according to various embodiments may include a washing machine that is in a loading type other than the top-loading washing machine and the front-loading washing machine.

In the top-loading washing machine, laundry may be washed using water current generated by a rotating body such as a pulsator. In the front-loading washing machine, laundry may be washed by repeatedly lifting and lowering the laundry by rotating a drum. The front-loading washing machine may include a dryer combined washing machine capable of drying laundry stored in a drum. The dryer combined washing machine may include a hot air supply device for supplying high-temperature air into the drum and a condensing device for removing moisture from air discharged from the drum. For example, the dryer combined washing machine may include a heat pump device. The washing machine according to various embodiments may include a washing machine using a washing method other than the above-described washing method.

The washing machine according to various embodiments may include a housing accommodating various components therein. The housing may be provided in the form of a box including a laundry inlet on one side thereof.

The washing machine may include a door for opening and closing the laundry inlet. The door may be rotatably mounted to the housing by a hinge. At least a portion of the door may be transparent or translucent to allow the inside of the housing to be visible.

The washing machine may include a tub arranged inside the housing to store water. The tub may be formed in a substantially cylindrical shape with a tub opening formed at one side thereof. The tub may be disposed inside the housing in such a way that the tub opening corresponds to the laundry inlet.

The tub may be connected to the housing by a damper. The damper may absorb vibration generated when the drum rotates, and the damper may reduce vibration transmitted to the housing.

The washing machine may include a drum provided to accommodate laundry.

The drum may be disposed inside the tub in such a way that a drum opening provided at one side of the drum corresponds to the laundry inlet and the tub opening. Laundry may pass through the laundry inlet, the tub opening, and the drum opening, sequentially and then be accommodated in the drum or withdrawn from the drum.

The drum may perform each operation according to washing, rinsing, and/or spin-drying while rotating inside the tub. A plurality of through holes may be formed in a cylindrical wall of the drum to allow water stored in the tub to be introduced into or to be discharged from the drum.

The washing machine may include a driving device configured to rotate the drum. The driving device may include a drive motor and a rotating shaft for transmitting a driving force generated by the drive motor to the drum. The rotating shaft may penetrate the tub to be connected to the drum.

The driving device may perform respective operations according to washing, rinsing, and/or spin-drying, or drying processes by rotating the drum in a forward or reverse direction.

The washing machine may include a water supply device configured to supply water to the tub. The water supply device may include a water supply pipe and a water supply valve disposed in the water supply pipe. The water supply pipe may be connected to an external water supply source. The water supply pipe may extend from an external water supply source to a detergent supply device and/or the tub. Water may be supplied to the tub through the detergent supply device. Alternatively, water may be supplied to the tub without passing through the detergent supply device.

The water supply valve may open or close the water supply pipe in response to an electrical signal of a controller. The water supply valve may allow or block the supply of water to the tub from an external water supply source. The water supply valve may include a solenoid valve configured to open and close in response to an electrical signal.

The washing machine may include the detergent supply device configured to supply detergent to the tub. The detergent supply device may include a manual detergent supply device that requires a user to input detergent to be used for each washing, and an automatic detergent supply device that stores a large amount of detergent and automatically inputs a predetermined amount of detergent during washing. The detergent supply device may include a detergent box for storing detergent. The detergent supply device may be configured to supply detergent into the tub during a water supply process. Water supplied through the water supply pipe may be mixed with detergent via the detergent supply device. Water mixed with detergent may be supplied into the tub. Detergent is used as a term including detergent for pre-washing, detergent for main washing, fabric softener, bleach, etc., and the detergent box may be partitioned into a storage region for the pre-washing detergent, a storage region for the main washing detergent, a storage region for the fabric softener, and a storage region for the bleach.

The washing machine may include a drainage device configured to discharge water contained in the tub to the outside. The drainage device may include a drain pipe extending from a bottom of the tub to the outside of the housing, a drain valve disposed on the drain pipe to open and close the drain pipe, and a pump disposed on the drain pipe. The pump may pump water from the drain pipe to the outside of the housing.

The washing machine may include a control panel disposed on one side of the housing. The control panel may provide a user interface for interaction between a user and the washing machine. The user interface may include at least one input interface and at least one output interface.

The at least one input interface may convert sensory information received from a user into an electrical signal.

The at least one input interface may include a power button, an operation button, a course selection dial (or a course selection button), and a washing/rinsing/spin-drying setting button. The at least one input interface may include a tact switch, a push switch, a slide switch, a toggle switch, a micro switch, a touch switch, a touch pad, a touch screen, a jog dial, and/or a microphone.

The at least one output interface may visually or audibly transmit information related to the operation of the washing machine to a user.

For example, the at least one output interface may transmit information related to a washing course, operation time of the washing machine, and washing/rinsing/spin-drying settings to the user. Information about the operation of the washing machine may be output through a screen, an indicator, or voice. The at least one output interface may include a Liquid Crystal Display (LCD) panel, a Light Emitting Diode (LED) panel, or a speaker.

The washing machine may include a communication module for wired and/or wireless communication with an external device.

The communication module may include at least one of a short-range communication module and a long-range communication module.

The communication module may transmit data to an external device (e.g., a server, a user device, and/or a home appliance) or receive data from the external device. For example, the communication module may establish communication with a server and/or a user device and/or a home appliance, and transmit and receive various types of data.

For the communication, the communication module may establish a direct (e.g., wired) communication channel or a wireless communication channel between external devices, and support the performance of the communication through the established communication channel. According to one embodiment, the communication module may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or WAN). These various types of communication modules may be integrated as one component (e.g., a single chip) or implemented as a plurality of separate components (e.g., multiple chips).

The short-range wireless communication module may include a Bluetooth communication module, a Bluetooth Low Energy (BLE) communication module, a near field communication module, a WLAN (Wi-Fi) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry may transmit and receive radio signals with at least one of a base station, an external terminal, and a server on a mobile communication network.

According to one embodiment, the communication module may communicate with an external device such as a server, a user device and other home appliances through an access point (AP). The access point (AP) may connect a local area network (LAN), to which a washing machine or a user device is connected, to a wide area network (WAN) to which a server is connected. The washing machine or the user device may be connected to the server through the wide area network (WAN). The controller may control various components of the washing machine (e.g., the drive motor, and the water supply valve). The controller may control various components of the washing machine to perform at least one operation including water supply, washing, rinsing, and/or spin-drying according to a user input. For example, the controller may control the drive motor to adjust the rotational speed of the drum or control the water supply valve of the water supply device to supply water to the tub.

The controller may include hardware such as a CPU or memory, and software such as a control program. For example, the controller may include at least one memory for storing an algorithm and program-type data for controlling the operation of components in the washing machine, and at least one processor configured to perform the above-mentioned operation by using the data stored in the at least one memory. The memory and the processor may each be implemented as separate chips. The processor may include one or more processor chips or may include one or more processing cores. The memory may include one or more memory chips or one or more memory blocks. Alternatively, the memory and the processor may be implemented as a single chip.

Hereinafter, various embodiments according to the disclosure will be described in detail with reference to the accompanying drawings.

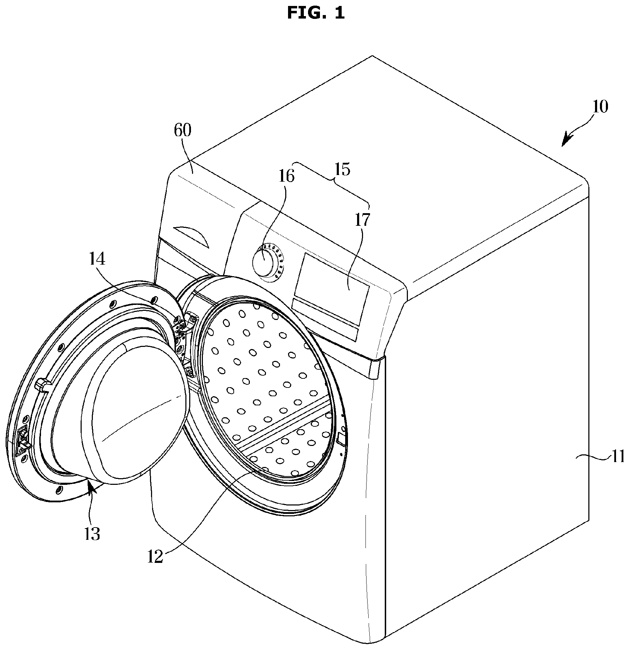

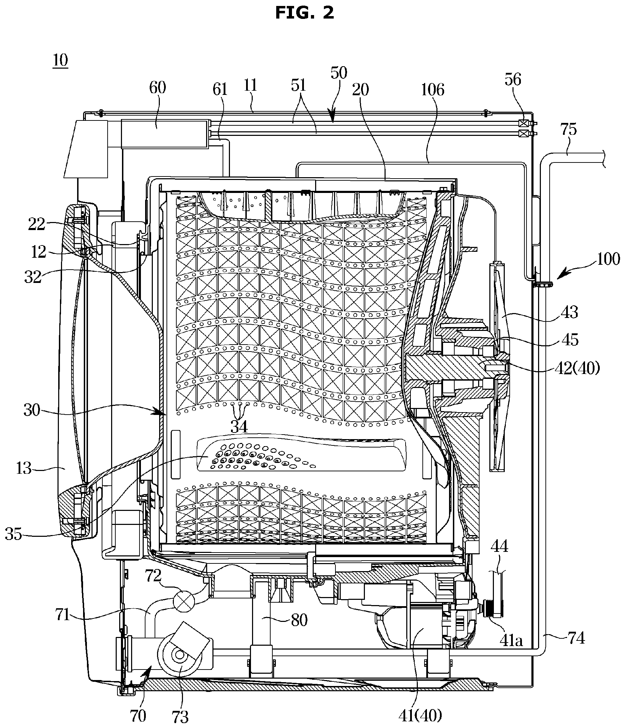

FIG. 1 shows a washing machine according to an embodiment of the present disclosure. FIG. 2 shows a cross-section of the washing machine shown in FIG. 1.

As shown in FIGS. 1 and 2, a washing machine 10 may include a washing machine housing 11 accommodating various components therein. The washing machine housing 11 may form the exterior of the washing machine 10. The washing machine housing 11 may have a box shape with a portion open.

The washing machine housing 11 may include a housing opening 12 formed to provide access to the interior of a drum 30. The housing opening 12 may open substantially forwardly.

The washing machine 10 may include a door 13 for opening or closing the housing opening 12 arranged in the washing machine housing 11. The door 13 may be rotatably mounted on the washing machine housing 11 by a hinge 14. At least a portion of the door 13 may be transparent or translucent to allow the inside of the washing machine housing 11 to be visible.

The washing machine 10 may include a tub 20 disposed within the washing machine housing 11 to store water. The tub 20 may be placed inside the washing machine housing 11. The tub 20 may include a tub opening 22 arranged to correspond to the housing opening 12. The tub opening 22 may be open substantially to a front side. The tub 20 may be supported within the washing machine housing 11. The tub 20 may have a substantially cylindrical shape with one side open.

The tub 20 may be resiliently supported from the washing machine housing 11 by a damper 80. The damper 80 may be connected to the washing machine housing 11 and the tub 20. The damper 80 may absorb vibration energy between the tub 20 and the washing machine housing 11 when the vibration generated by rotation of the drum 30 is transmitted to the tub 20 and/or the washing machine housing 11, thereby damping the vibration.

The washing machine 10 may include the drum 30 provided to accommodate laundry. The drum 30 may be rotatably provided inside the tub 20. The drum 30 may perform washing, rinsing, and/or spin-drying while rotating inside the tub 20. The drum 30 may include a plurality of through holes 34 connecting an interior space of the drum 30 and an interior space of the tub 20. The drum 30 may have a substantially cylindrical shape with one side open. At least one lifter 35 may be installed on an inner circumferential surface of the drum 30 to allow the laundry to be raised and lowered when the drum 30 rotates.

The drum 30 may include a drum opening 32 provided to correspond to the housing opening 12 and the tub opening 22. Laundry may pass through the housing opening 12, the tub opening 22, and the drum opening 32, and then be introduced into the drum 30 or withdrawn from the drum 30.

The washing machine 10 may include a driving device 40 configured to rotate the drum 30. The driving device 40 may include a drive motor 41 and a rotating shaft 42 for transmitting a driving force generated by the drive motor 41 to the drum 30. The rotating shaft 42 may penetrate the tub 20 to be connected to the drum 30.

The washing machine 10 may be classified into a direct drive type in which the rotation shaft 42 is directly connected to the drive motor 41 to rotate the drum 30, and an indirect drive type in which a pulley 43 is connected between the drive motor 41 and the rotation shaft 42.

The washing machine 10 according to an embodiment may be arranged as an indirect drive type, but is not limited thereto and may be arranged as a direct drive type.

The rotating shaft 42 may be connected to the drum 30 at one end and to the pulley 43 at the other end so as to receive power from the drive motor 41. A motor pulley 41a may be formed on a rotational shaft of the drive motor 41. A drive belt 44 may be provided between the motor pulley 41a and the pulley 43, so that the rotating shaft 42 may be driven by the drive belt 44.

In a rearward portion of the tub 20, a bearing housing 45 may be installed to rotatably support the rotating shaft 42. The bearing housing 45 may be formed of an aluminum alloy and may be inserted into the rearward portion of the tub 20 when the tub 20 is injection-molded.

The driving device 40 may be provided to rotate the drum 30 in a forward or reverse direction to perform washing, rinsing, and/or spin-drying, or drying operations.

The washing machine 10 may include a water supply device 50. The water supply device 50 may supply water to the tub 20. The water supply device 50 may be located on an upper side of the tub 20. The water supply device 50 may include a water supply pipe 51 and a water supply valve 56 disposed in the water supply pipe 51. The water supply pipe 51 may be connected to an external water supply source. The water supply pipe 51 may extend from the external water supply source to a detergent supply device 60 and/or the tub 20. Water may be supplied to the tub 20 through the detergent supply device 60. Alternatively, water may be supplied to the tub 20 without passing through the detergent supply device 60.

The water supply valve 56 may open or close the water supply pipe 51 in response to an electrical signal from a controller 90. The water supply valve 56 may allow or block the supply of water from an external water supply source to the tub 20. The water supply valve 56 may include, for example, a solenoid valve configured to open or close in response to an electrical signal.

The washing machine 10 may include the detergent supply device 60 configured to supply detergent to the tub 20. The detergent supply device 60 may be configured to supply detergent into the tub 20 during a water supply process. Water supplied through the water supply pipe 51 may be mixed with detergent via the detergent supply device 60. Water mixed with detergent may be supplied to the interior of the tub 20. Detergent may include not only detergents for washing, but also rinses, deodorants, disinfectants, or air fresheners for dryer. The detergent supply device 60 may be connected to the tub 20 via a connecting pipe 61.

The washing machine 10 may include a drainage device 70. The drainage device 70 may be configured to drain water contained in the tub 20 to the outside. The drainage device 70 may include a drain pump 73 draining the water in the tub 20 to the outside of the washing machine housing 11, a connecting hose 71 connecting the tub 20 and the drain pump 73 to allow the water in the tub 20 to flow into the drain pump 73, and a drain hose 74 guiding the water pumped by the drain pump 73 to the outside of the washing machine housing 11. The drainage device 70 may include a drain valve 72 provided on the connecting hose 71 to open or close the connecting hose 71.

The washing machine 10 may provide a user interface device 15 for interaction between a user and the washing machine 10.

The washing machine 10 may include at least one user interface device 15. The user interface device 15 may include at least one input interface 16 and at least one output interface 17.

The at least one input interface 16 may convert sensory information received from a user into an electrical signal.

The at least one input interface 16 may include a power button, an operation button, a course selection dial (or a course selection button), and a washing/rinsing/spin-drying setting button. The at least one input interface 16 may include, for example, a tact switch, a push switch, a slide switch, a toggle switch, a micro switch, a touch switch, a touch pad, a touch screen, a jog dial, and/or a microphone, or the like.

The at least one output interface 17 may transmit various data related to an operation of the washing machine 10 to the user by generating sensory information.

For example, the at least one output interface 17 may transmit information related to a washing course, operation time of the washing machine 10, and washing /rinsing/spin-drying settings to the user. Information about the operation of the washing machine 10 may be output through a screen, indicator, voice, or the like. The at least one output interface 17 may include, for example, a LCD panel, a LED panel, a speaker, or the like.

The washing machine 10 may include a drain guide 100 connected to the drain hose 74.

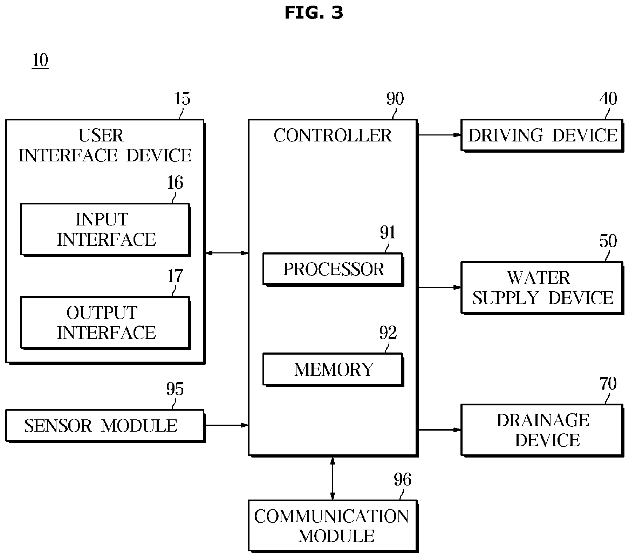

FIG. 3 is a control block diagram of the washing machine according to an embodiment.

In an embodiment, the washing machine 10 may include the user interface device 15, the driving device 40, the water supply device 50, the drainage device 70, a sensor module 95, a communication module 96, and a controller 90.

The user interface device 15 may provide a user interface for interacting with the user and the washing machine 10.

The user interface device 15 may include the at least one input interface 16 and the at least one output interface 17.

The at least one input interface 16 may convert sensory information received from the user into an electrical signal.

The at least one input interface 16 may include a power button, an operation button, a course selection dial (or a course selection button), and a washing/rinsing/spin-drying setting button. The at least one input interface 16 may include, for example, a tact switch, a push switch, a slide switch, a toggle switch, a micro switch, a touch switch, a touch pad, a touch screen, a jog dial, and/or a microphone.

The at least one output interface 17 may transmit various data related to the operation of the washing machine 10 to the user by generating sensory information.

For example, the at least one output interface 17 may transmit information related to a washing course, operation time of the washing machine 10, and washing/rinsing/spin-drying settings to the user. Information about the operation of the washing machine 10 may be output through a screen, indicator, voice, or the like. The at least one output interface 17 may include, for example, a LCD panel, a LED panel, a speaker, or the like.

The driving device 40 may include the drive motor 41 that provides the driving force to rotate the drum 30. The driving device 40 may operate based on a control signal from the controller 90.

The water supply device 50 may include the water supply valve 56 configured to open or close the water supply pipe 51 extending from an external water supply source to the detergent supply device 60 and/or the tub 20. The water supply valve 56 may be opened and closed based on a control signal from the controller 90.

The drainage device 70 may include the drain pump 73 for draining the water in the tub 20 to the outside of the washing machine housing 11. The drain pump 73 may operate based on a control signal from the controller 90.

The sensor module 95 may include at least one sensor for obtaining information related to an operational state of the washing machine 10.

For example, the sensor module 95 may include at least one of a water level sensor to detect a water level in the tub, a sensor to detect the operational state of the driving device 40, and a flow sensor to detect a flow rate into the tub 20 via the water supply device 50, or a sensor to detect the operational state of the drainage device 70.

The sensor to detect the operational state of the driving device 40 may include, for example, a current sensor to measure a drive current being applied to the drive motor 41, but is not limited thereto.

The sensor to detect the operational state of the drainage device 70 may include, for example, a current sensor to measure the drive current being applied to the drainage pump 73, but is not limited thereto.

The washing machine 10 may include the communication module 96 for wired and/or wireless communication with an external device.

The communication module 96 may include at least one of a short-range communication module or a long-range communication module.

The communication module 96 may exchange data with an external device (e.g., a server, user device, a home appliance, and/or a filter device 1000). For example, the communication module 96 may establish communication with a server and/or a user device and/or a home appliance, and transmit and receive various types of data.

For the communication, the communication module 96 may establish a direct (e.g., wired) communication channel or a wireless communication channel between external devices, and support the performance of the communication through the established communication channel. According to an embodiment, the communication module 96 may include a wireless communication module (e.g., a cellular communication module, a short-range wireless communication module, or a global navigation satellite system (GNSS) communication module) or a wired communication module (e.g., a local area network (LAN) communication module, or a power line communication module). Among these communication modules, the corresponding communication module may communicate with an external device through a first network (e.g., a short-range wireless communication network such as Bluetooth, wireless fidelity (Wi-Fi) direct, or infrared data association (IrDA)) or a second network (e.g., a long-range wireless communication network such as a legacy cellular network, a 5G network, a next-generation communication network, the Internet, or a computer network (e.g., LAN or WAN)). These various types of communication modules may be integrated as one component (e.g., a single chip) or implemented as a plurality of separate components (e.g., multiple chips).

The short-range wireless communication module may include a Bluetooth communication module, a Bluetooth Low Energy (BLE) communication module, a near field communication module, a WLAN (Wi-Fi) communication module, and a Zigbee communication module, an infrared data association (IrDA) communication module, a Wi-Fi Direct (WFD) communication module, an ultrawideband (UWB) communication module, an Ant+ communication module, a microwave (uWave) communication module, etc., but is not limited thereto.

The long-range wireless communication module may include a communication module that performs various types of long-range wireless communication, and may include a mobile communication circuitry. The mobile communication circuitry may transmit and receive radio signals with at least one of a base station, an external terminal, and a server on a mobile communication network.

In an embodiment, the communication module 96 may communicate with an external device such as a server, a user device and other home appliances through an access point (AP). The access point (AP) may connect a local area network (LAN), to which the washing machine 10 or a user device is connected, to a wide area network (WAN) to which a server is connected. The washing machine 10 or the user device may be connected to the server through the wide area network (WAN). The controller 90 may control various components of the washing machine 10 (e.g., the driving device 40, and the water supply valve 50). The controller 90 may control various components of the washing machine 10 to perform at least one operation including water supply, washing, rinsing, and/or spin-drying according to a user input. For example, the controller 90 may control the drive motor 41 to adjust the rotational speed of the drum 30 or control the water supply valve 56 of the water supply device 50 to supply water to the tub 20.

The controller 90 may include hardware such as a CPU or memory, and software such as a control program. For example, the controller 90 may include at least one memory 92 for storing an algorithm and program-type data for controlling the operation of components in the washing machine 10, and at least one processor 91 configured to perform the above-mentioned operation by using the data stored in the at least one memory 92. The memory 92 and the processor 91 may each be implemented as separate chips. The processor 91 may include one or more processor chips or may include one or more processing cores. The memory 92 may include one or more memory chips or one or more memory blocks. Alternatively, the memory 92 and the processor 91 may be implemented as a single chip.

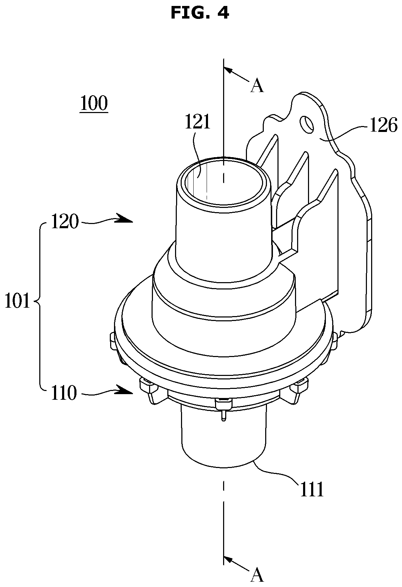

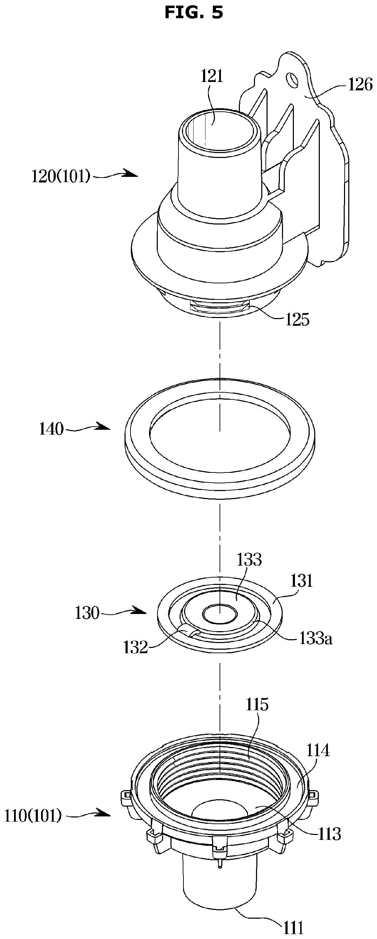

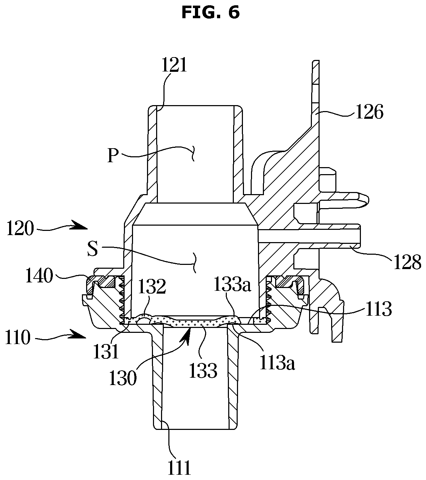

FIG. 4 shows the drain guide according to an embodiment of the present disclosure. FIG. 5 is an exploded view of the drain guide according to an embodiment of the present disclosure. FIG. 6 shows a cross-section along line A-A' shown in FIG 4.

Referring to FIGS. 4 to 6, the drain guide 100 may be connected to the drain hose 74 to guide the water discharged from the washing machine 10. The drain guide 100 may be mounted on the washing machine housing 11.

The drain guide 100 according to an embodiment may include a guide housing 101. The guide housing 101 may include a guide inlet 111 and a guide outlet 121. For example, the guide inlet 111 and the guide outlet 121 may be arranged in a substantially vertical direction. A guide flow path P may be formed between the guide inlet 111 and the guide outlet 121.

The guide inlet 111 may be connected to the drain hose 74. The water drained from the drainage device 70 may be guided to the drain guide 100 by the drain hose 74. The water guided to the drain guide 100 by the drain hose 74 may flow into the guide housing 101 via the guide inlet 111.

The guide outlet 121 may be connected to an extension hose 75. The water flowing into the guide housing 101 via the guide inlet 111 may be discharged to the outside of the guide housing 101 via the guide outlet 121. The water discharged from the guide housing 101 may be guided to the outside of the washing machine 10 by the extension hose 75.

The guide housing 101 may include a first guide housing 110 and a second guide housing 120 that may be coupled to the first guide housing 110. The guide inlet 111 may be provided in the first guide housing 110. The guide outlet 121 may be provided in the second guide housing 120.

The first guide housing 110 may include a first coupling portion 115 to be coupled to the second guide housing 120. The second guide housing 120 may include a second coupling portion 125 to be coupled to the first guide housing 110. In each of the first coupling portion 115 of the first guide housing 110 and the second coupling portion 125 of the second guide housing 120, a thread may be formed. As the first coupling portion 115 and the second coupling portion 125 are screwed-coupled, the first guide housing 110 may be coupled with the second guide housing 120.

In FIGS. 4 to 6, the guide housing 101 is shown to include the first guide housing 110 and the second guide housing 120 that are arranged in separate configurations, but is not limited thereto, and the first guide housing 110 and the second guide housing 120 may be formed integrally.

The guide housing 101 may include a mounting portion 126 for mounting to the washing machine housing 11. The mounting portion 126 may be arranged to correspond to an installation portion provided on a rear surface of the washing machine housing 11. When a fixing member is fixed to the mounting portion 126 in a state where the mounting portion 126 of the guide housing 101 has been located at the installation portion of the washing machine housing 11, the drain guide 100 may be mounted to the washing machine housing 11.

The drain guide 100 according to an embodiment may include a check valve 130. The check valve 130 may be provided to allow water to flow from the guide inlet 111 to the guide outlet 121, but to block the flow of water from the guide outlet 121 to the guide inlet 111. The check valve 130 may be provided to prevent water in the guide housing 101 from flowing back from the guide outlet 121 to the guide inlet 111.

The check valve 130 may include a material that is more flexible than that of the guide housing 101. At least a portion of the check valve 130 may include a material deformable by the pressure of water passing through the drain guide 100.

The check valve 130 may be mounted to the guide housing 101. The guide housing 101 may include a valve seating portion 113 on which the check valve 130 is mounted. The valve seating portion 113 may be provided in the first guide housing 110. The check valve 130 may be seated in the valve seating portion 113 of the first guide housing 110. A portion of the valve seating portion 113 proximate the guide inlet 111 may be provided as a door support portion 113a capable of supporting a valve door 133 of the check valve 130.

The check valve 130 may include a valve body 131 secured to the guide housing 101. When the first guide housing 110 is coupled to the second guide housing 120 in a state where the check valve 130 has been seated in the valve seating portion 113 of the first guide housing 110, the valve body 131 may be positioned between the first guide housing 110 and the second guide housing 120, thereby being fixed to the guide housing 101.

The check valve 130 may include the valve door 133 arranged to open or close the guide flow path P. The valve door 133 may be arranged to be rotatable with respect to the valve body 131. The valve door 133 may rotate within a predetermined range of angles relative to the valve body 131 to open or close the guide flow path P.

The valve door 133 may be in a position to close the guide flow path P while no external force is applied. The valve door 133 may be in a position opening the guide flow path P as an external force is applied.

The guide housing 101 may form a space S for opening and closing the valve door 133. The formation of the space S in the guide housing 101 may allow the valve door 133 to rotate in a predetermined range of angles relative to the valve body 131 to open or close the guide flow path P.

The check valve 130 may be arranged to cause the valve door 133 to open the guide flow path P by the hydraulic pressure of water flowing from the guide inlet 111 to the guide outlet 121. As the drainage device 70 operates while water flows into the drain guide 100 via the drain hose 74, the check valve 130 may open the guide flow path P by hydraulic pressure of the water flowing into the drain guide 100.

The valve door 133 may include a border portion 133a supported by the door support portion 113a while the guide flow path P is in the closed position. The valve door 133 may have a substantially disc shape to correspond to the shape of the guide inlet 111. The border portion 133a may extend in a circumferential direction of the valve door 133. The border portion 133a may have a convex shape in a direction protruding from the door support portion 113a.

The check valve 130 may include a connection portion 132 connecting the valve body 131 and the valve door 133. The connection portion 132 may be arranged to be deformable for opening or closing the valve door 133. The valve door 133 may be arranged to be spaced apart from the valve body 131 by a portion different from the portion connected to the valve body 131 by the connection portion 132. The connection portion 132 may exert a force on the valve door 133 in a direction that causes the valve door 133 to close the guide flow path P.

The drain guide 100 may include an air supply portion 128 for supplying air to the guide flow path P between the guide inlet 111 and the guide outlet 121. Because the air supply portion 128 is arranged to supply air to the guide flow path P, the pressure inside the drain guide 100 may be varied. As the pressure inside the drain guide 100 is varied, the drain guide 100 may prevent siphoning from occurring inside the drain guide 100. By preventing siphoning in the drain guide 100, the water in the drain hose 74 and the extension hose 75 may be prevented from being unintentionally drained by siphoning while the drainage device 70 is not operating.

The air supply portion 128 may be arranged in the second guide housing 120. The air supply portion 128 may be located closer to the guide outlet 121 than the check valve 130. The air supply portion 128 may be located further from the guide inlet 111 than the check valve 130. With the air supply portion 128 located closer to the guide outlet 121 than the check valve 130, the drain guide 100 may effectively prevent drainage from being siphoned from within. The air supply portion 128 may be located on an upper side of the check valve 130.

Referring to FIG. 2, the washing machine 10 may include an air guide 106 for connecting the air supply portion 128 and the tub 20. The interior of the drain guide 100 and the interior of the tub 20 may be communicated by the air guide 106. In FIG. 2, the air supply portion 128 is shown as being connected to the tub 20, but it is not limited thereto. For example, the air supply portion 128 may be connected anywhere upstream of the drainage device 70 in a direction in which water is drained, thereby preventing siphoning in the interior of the drain guide 100.

The drain guide 100 may include a sealing member 140 for sealing between the first guide housing 110 and the second guide housing 120. The sealing member 140 may include a material that is more flexible than that of the guide housing 101.

The second guide housing 120 may be coupled to the first guide housing 110 in a state where the sealing member 140 has been seated on a sealing member seating portion 114 provided in the first guide housing 110, so that the sealing member may be secured between the guide housing 110 and the second guide housing 120.

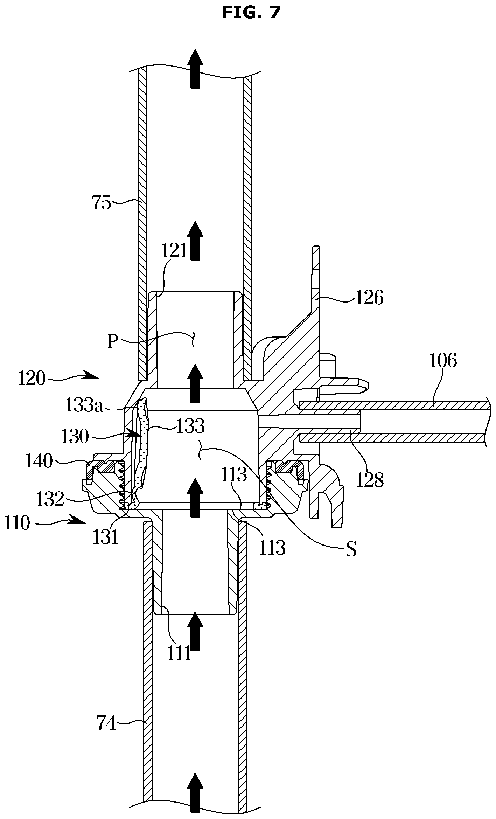

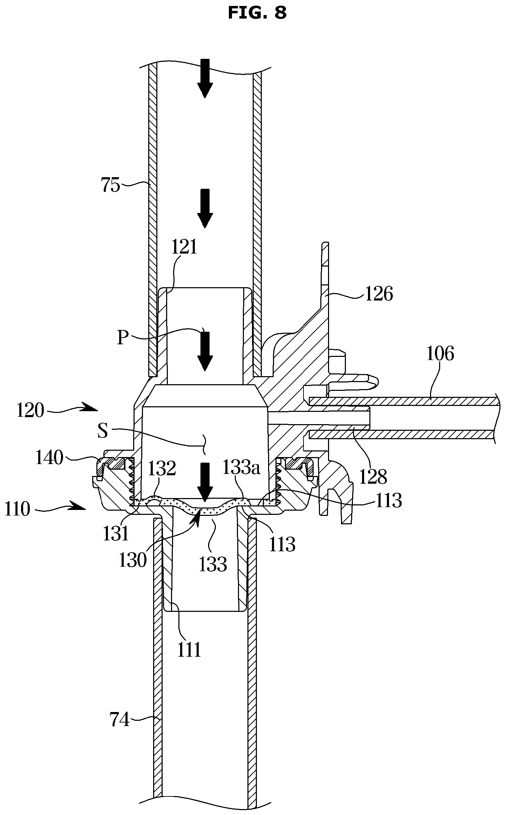

FIG. 7 shows a state in which water is drained through the drain guide according to an embodiment of the present disclosure. FIG. 8 shows a state in which backflow is prevented by the drain guide according to an embodiment of the present disclosure.

Referring to FIG. 7, during draining of the washing machine 10, water discharged from the drainage device 70 may move to the drain guide 100 through the drain hose 74. The hydraulic pressure of the water flowing into the drain guide 100 may cause the check valve 130 to open the guide flow path P.

While the drainage device 70 is not in operation, the air supply portion 128 may cause the pressure inside the drain guide 100 to change, thereby preventing unintentional draining by siphoning from the interior of drain guide 100.

Referring to FIG. 8, when the operation of the drainage device 70 is stopped and drainage by siphon is stopped by the air supply portion 128, the valve door 133 of the check valve 130 may be in the position of closing the guide flow path P. At this time, the water in the extension hose 75 may flow by gravity towards the drain hose 74, and the valve door 133 may be pressurized by the water flowing back from the guide flow path P.

The valve door 133 may be supported by the door support portion 113a when pressed by water flowing from the guide outlet 121 toward the guide inlet 111 while in the position of close the guide flow path P. The door support portion 113a may support the valve door 133 in a direction opposite to the direction in which the valve door 133 is pressed by water when water flows back from the guide outlet 121 to the guide inlet 111 in the guide flow path P.

In such configurations, the washing machine 10 according to an embodiment may prevent draining by siphoning from the interior of the drain hose 74 and the extension hose 75 while the drainage device 70 is not in operation. Furthermore, the washing machine 10 according to an embodiment may prevent water from the extension hose 75 from flowing back into the drain hose 74 and flowing into the drainage device 70.

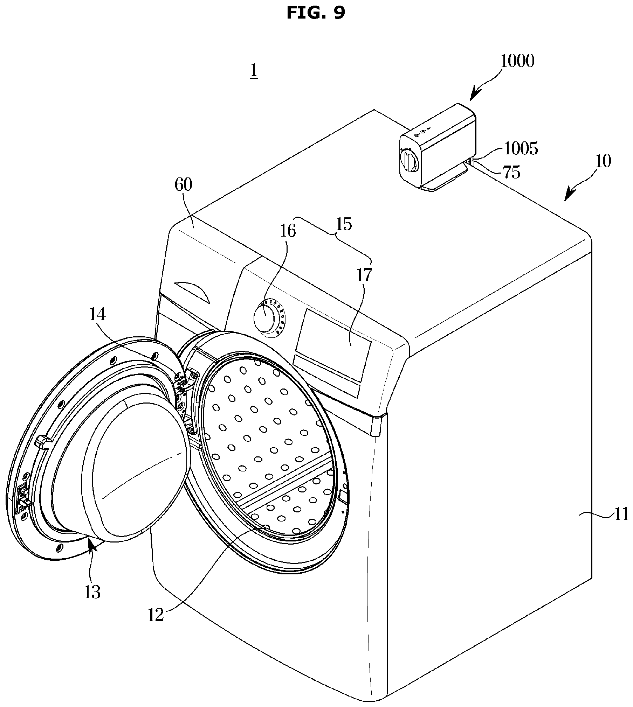

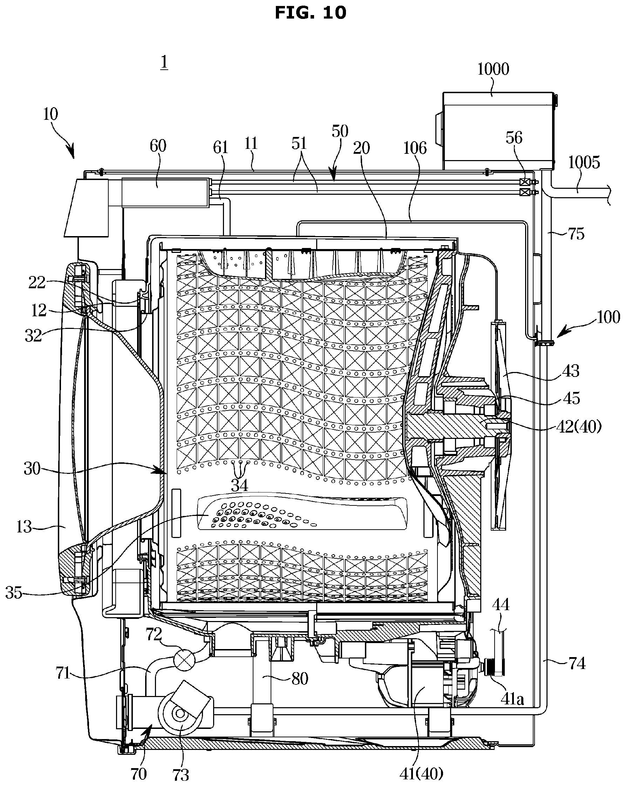

FIG. 9 shows a clothes treating apparatus according to an embodiment of the present disclosure. FIG. 10 shows a cross-section of the clothes treating apparatus according to an embodiment of the present disclosure.

Referring to FIGS. 9 and 10, a clothes treating apparatus 1 according to an embodiment may include the washing machine 10 and a filter device 1000 that may be connected to the drainage device 70 of the washing machine 10. The washing machine 10 shown in FIGS. 9 and 10 may be provided in the same configuration as the washing machine 10 shown in FIGS. 1 and 2. The drain guide 100 of the washing machine 10 shown in FIGS. 9 and 10 may be provided in the same configuration as the drain guide 100 of the washing machine 10 shown in FIGS. 1 and 2.

The filter device 1000 may be arranged on the outside of the washing machine 10. The filter device 1000 may be arranged to filter foreign substances from water discharged from the washing machine 10. The filter device 1000 may be arranged to filter foreign substances having a size that is smaller than the size of foreign substances that may be filtered in the washing machine 10. For example, the filter device 1000 may be arranged to filter foreign substances having a size that is smaller than the size of foreign substances that may be filtered in the drainage device 70 of the washing machine 10. Water from which foreign substances have been filtered by the filter device 1000 may be discharged to the outside of the clothes treating apparatus 1 via a drain line 1005.

The drain guide 100 of the washing machine 10 according to an embodiment may be arranged to guide water discharged from the drainage device 70 to the filter device 1000. The drain guide 100 may be connected to the drainage device 70 by the drain hose 74. The drain guide 100 may be connected to the filter device 1000 by the extension hose 75. The drain guide 100 may be connected to the tub 20 by the air guide 106.

In such configurations, the clothes treating apparatus 1 according to an embodiment may prevent draining by siphoning from the interior of the drain hose 74 and the extension hose 75 while the drainage device 70 is not in operation. Furthermore, the clothes treating apparatus 1 according to an embodiment may prevent water from the extension hose 75 from flowing back into the drain hose 74 and flowing into the drainage device 70.

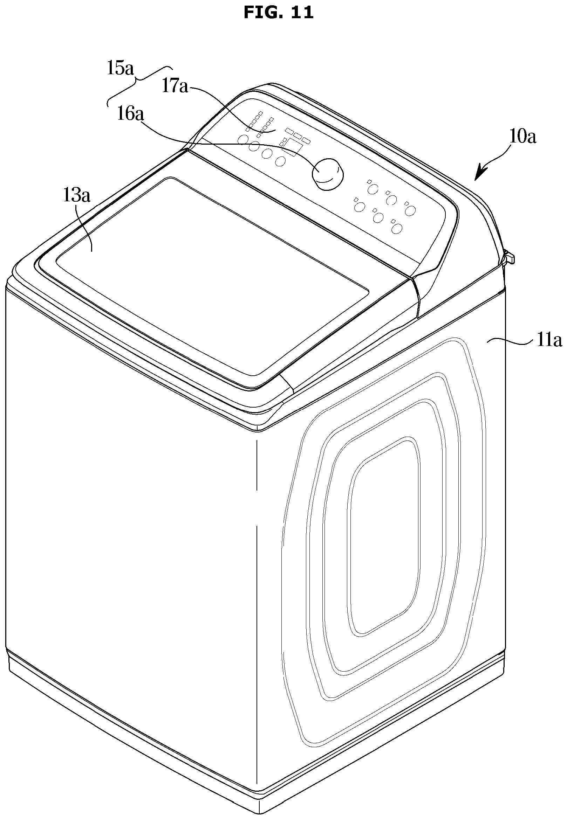

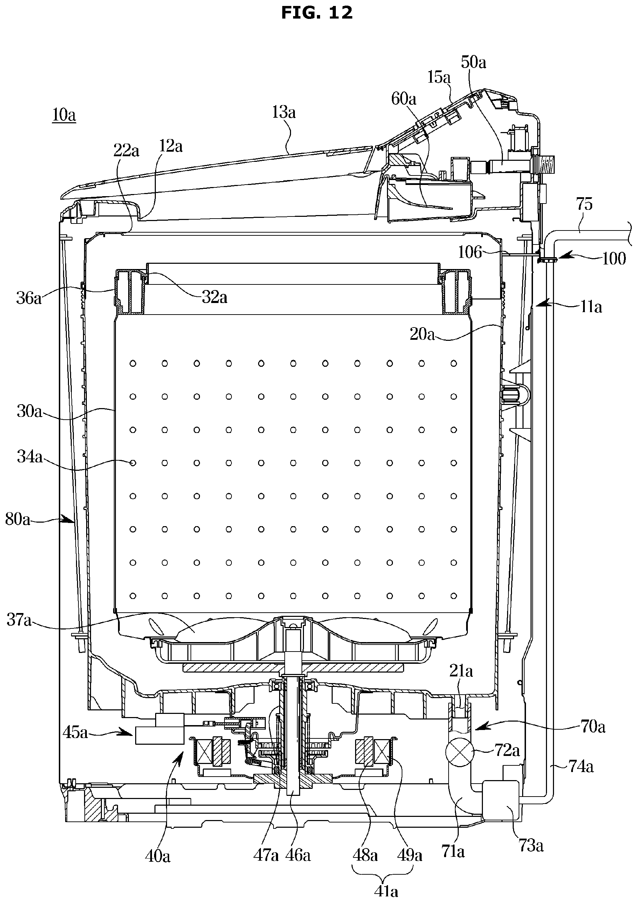

FIG. 11 shows a washing machine according to an embodiment of the present disclosure. FIG. 12 shows a cross-section of the washing machine according to an embodiment of the present disclosure.

With reference to FIGS. 11 and 12, a washing machine 10a according to an embodiment will be described. The drain guide 100 of the washing machine 10a shown in FIGS. 11 and 12 may be provided in the same configuration as the drain guide 100 of the washing machine 10 shown in FIGS. 1 and 2. For example, the drain guide 100 according to an embodiment may be applied to a front-loading washing machine or a top-loading washing machine.

The washing machine 10a shown in FIGS. 11 and 12 may have the same control configuration as that of the washing machine 10 shown in FIG. 3.

As shown in FIGS. 11 and 12, the washing machine 10a may include a housing 11a accommodating various components therein. The housing 11a may form the exterior of the washing machine 10a. The housing 11a may have a box shape with a portion open.

The housing 11a may include a housing opening 12a formed to provide access to the interior of a drum 30a. The housing opening 12a may be open substantially forwardly.

The washing machine 10a may include a door 13a for opening and closing the housing opening 12a arranged in the housing 11a. The door 13a may be rotatably mounted on the housing 11a by a hinge. At least a portion of the door 13a may be transparent or translucent to allow the inside of the housing 11a to be visible.

The washing machine 10a may include a tub 20a disposed within the housing 11a to store water. The tub 20a may be placed inside the housing 11a. The tub 20a may include a tub opening 22a arranged to correspond to the housing opening 12a. The tub opening 22a may be open substantially upwardly. The tub 20a may be supported within the housing 11a. The tub 20a may have a substantially cylindrical shape with one side open.

The tub 20a may be elastically supported from the housing 11a by a damper 80a. The damper 80a may be connected to the housing 11a and the tub 20a. The damper 80a may absorb vibration energy between the tub 20a and the housing 11a when the vibration generated by rotation of the drum 30a is transmitted to the tub 20a and/or the housing 11a, thereby damping the vibration.

The washing machine 10a may include the drum 30a provided to accommodate laundry. The drum 30a may be rotatably provided inside the tub 20a. The drum 30a may perform washing, rinsing, and/or spin-drying while rotating inside the tub 20a. The drum 30a may include a plurality of through holes 34a connecting the interior space of the drum 30a and the interior space of the tub 20a. The drum 30a may have a substantially cylindrical shape with one side open.

A balancing device 36a may be installed on an upper portion of the drum 30a to eliminate an imbalance in the load caused by laundry. The balancing device 36a may include a housing having an annular channel, and a mass body of balls or fluid movably arranged inside the channel, and the balls or fluid may move in response to the rotation of the drum 30a to resolve the load imbalance of the drum 30a.

A pulsator 37a may be rotatably arranged at a lower portion of the drum 30a to generate water current. Laundry may be washed by the water current generated by the pulsator 37a.

The drum 30a may include a drum opening 32a arranged to correspond to the housing opening 12a and the tub opening 22a. Laundry may pass through the housing opening 12a, the tub opening 22a, and the drum opening 32a, and then be introduced into the drum 30a or withdrawn from the drum 30a.

The washing machine 10a may include a driving device 40a configured to rotate the drum 30a and the pulsator 37a. The driving device 40a may include a drive motor 41a and a shaft system for transmitting the driving force generated by the drive motor 41a to the drum 30a and the pulsator 37a.

The drive motor 41a may include a fixed stator 48a and a rotor 49a that rotates in electromagnetically interaction with the stator 48a.

The shaft system may include a spin-drying shaft 47a arranged to transmit the driving force of the drive motor 41a to the drum 30a, a washing shaft 46a arranged to transmit the driving force of the drive motor 41a to the pulsator 37a, a clutch device 45a configured to connect or disconnect the drive motor 41a and the spin-drying shaft 47a.

The spin-drying shaft 47a may be formed to have a hollow, and the washing shaft 46a may be arranged in the hollow of the spin-drying shaft 47a. The washing shaft 46a may remain connected to the rotor 49a of the drive motor 41a, and the spin-drying shaft 47a may be connected to or disconnected from the rotor 49a of the drive motor 41a by the clutch device 45a.

When the clutch device 45a disconnects the spin-drying shaft 47a and the drive motor 41a, power may be transmitted to the washing shaft 46a to rotate only the pulsator 37a, and when the clutch device 45a connects the spin-drying shaft 47a and the drive motor 41a, power may be transmitted to both the spin-drying shaft 47a and the washing shaft 46a to rotate the drum 30a and the pulsator 37a simultaneously.

In the case where only the pulsator 37a rotates, water current for washing may be generated by the rotation of the pulsator 37a, and laundry may be rotated by the generated water current for washing and rubbed against the drum 30a, thereby enabling the laundry to be washed. In the case where both the pulsator 37a and the drum 30a rotate, the laundry may be rotated in the drum 30a and moisture may be removed from the laundry by a centrifugal force, thereby enabling the laundry to be spin-dried.

The washing machine 10a may include a water supply device 50a. The water supply device 50a may supply water to the tub 20a. The water supply device 50a may be located on an upper side of the tub 20a. The water supply device 50a may include a water supply pipe and a water supply valve disposed in the water supply pipe. The water supply pipe may be connected to an external water supply source. The water supply pipe may extend from the external water supply source to the detergent supply device 60a and/or the tub 20a. Water may be supplied to the tub 20a through the detergent supply device 60a. Alternatively, water may be supplied to the tub 20a without passing through the detergent supply device 60a.

The water supply valve may open and close the water supply pipe in response to an electrical signal from a controller. The water supply valve may allow or block the supply of water from an external water supply source to the tub 20a. The water supply valve may include, for example, a solenoid valve configured to open and close in response to an electrical signal.

The washing machine 10a may include the detergent supply device 60a configured to supply detergent to the tub 20a. The detergent supply device 60a may be configured to supply detergent into the tub 20a during a water supply process. Water supplied through the water supply pipe may be mixed with detergent via the detergent supply device 60a. Water mixed with detergent may be supplied to the interior of the tub 20a. Detergents may include not only detergents for washing, but also rinses, deodorants, disinfectants, or air fresheners for dryer.

The washing machine 10a may include a drainage device 70a. The drainage device 70a may be configured to drain water contained in the tub 20a to the outside. A drain outlet 21a may be formed on a lower portion of the tub 20a to drain water stored in the tub 20a to the outside of the tub 20a. A connecting hose 71a may be connected to the drain outlet 21a, and a drain valve 72a may be provided on the connecting hose 71a to open and close the connecting hose 71a.

The drainage device 70a may include a drain pump 73a. The drain pump 73a may drain water through the drain hose 74a. The water drained through the drain hose 74a may travel to the drain guide 100.

The drain guide 100 may be connected to the tub 20a by the air guide 106. The water passing through the drain guide 100 may be discharged to the outside of the washing machine 10a through the extension hose 75.

The washing machine 10a may provide a user interface device 15a for interaction between the user and the washing machine 10a.

The washing machine 10a may include at least one user interface device 15a. The user interface device 15a may include at least one input interface 16a and at least one output interface 17a.

The at least one input interface 16a may convert sensory information received from the user into an electrical signal.

The at least one input interface 16a may include a power button, an operation button, a course selection dial (or a course selection button), and a washing/rinsing/spin-drying setting button. The at least one input interface 16a may include, for example, a tact switch, a push switch, a slide switch, a toggle switch, a micro switch, a touch switch, a touch pad, a touch screen, a jog dial, and/or a microphone, or the like.

The at least one output interface 17a may transmit various data related to the operation of the washing machine 10a to the user by generating sensory information.

For example, the at least one output interface 17a may transmit information related to a washing course, operation time of the washing machine 10, and washing /rinsing/spin-drying settings to the user. Information about the operation of the washing machine 10 may be output through a screen, indicator, voice, or the like. The at least one output interface 17 may include, for example, a LCD panel, a LED panel, a speaker, or the like.

In such configurations, the washing machine 10a according to an embodiment may prevent draining by siphoning from the interior of the drain hose 74a and the extension hose 75 while the drainage device 70a is not in operation. Furthermore, the washing machine 10a according to an embodiment may prevent water from the extension hose 75 from flowing back into the drain hose 74a and flowing into the drainage device 70a.

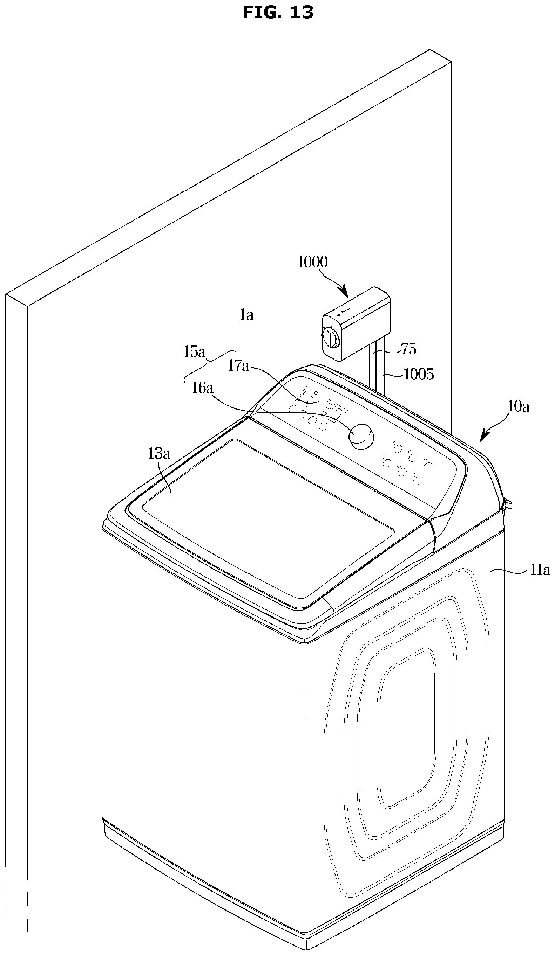

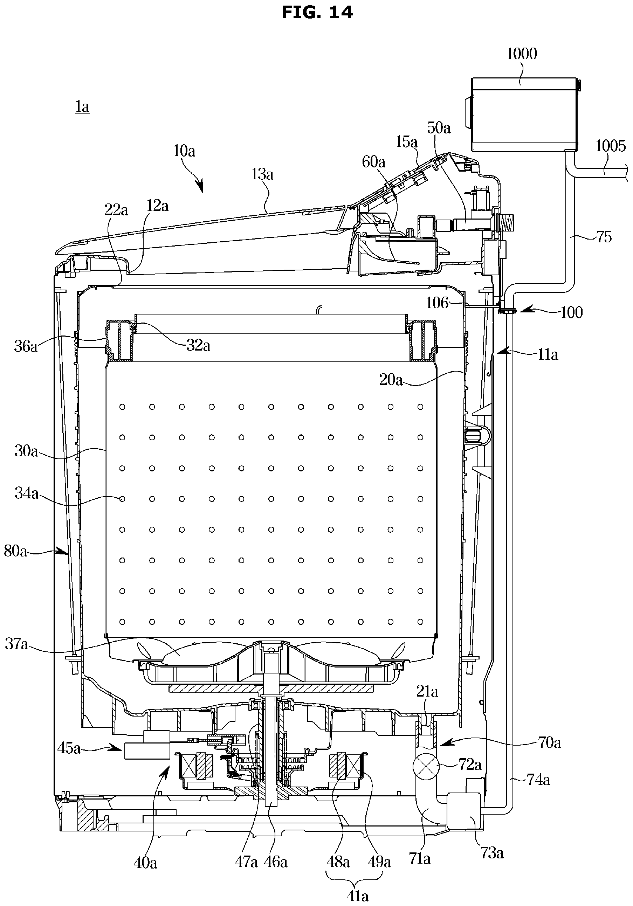

FIG. 13 shows a clothes treating apparatus according to an embodiment of the present disclosure. FIG. 14 shows a cross-section of the clothes treating apparatus according to an embodiment of the present disclosure.

Referring to FIGS. 13 and 14, a clothes treating apparatus 1a according to an embodiment may include the washing machine 10a and the filter device 1000 that may be connected to the drainage device 70a of the washing machine 10a.

The washing machine 10a shown in FIGS. 13 and 14 may be provided in the same configuration as the washing machine 10a shown in FIGS. 11 and 12. The drain guide 100 of the washing machine 10a shown in FIGS. 13 and 14 may be provided in the same configuration as the drain guide 100 of the washing machine 10 shown in FIGS. 1 and 2. The clothes treating apparatus 1a shown in FIGS. 13 and 14 may include the same filter device 1000 as the filter device 1000 shown in FIGS. 9 and 10.

The drain guide 100 of the washing machine 10a according to an embodiment may be arranged to guide water drained from the drainage device 70a to the filter device 1000. The drain guide 100 may be connected to the drainage device 70a by the drain hose 74a. The drain guide 100 may be connected to the filter device 1000 by the extension hose 75. The drainage device 100 may be connected to the tub 20a by the air guide 106.

In such configurations, the clothes treating apparatus 1a according to an embodiment may prevent draining by siphoning from the interior of the drain hose 74a and the extension hose 75 while the drainage device 70a is not in operation. Furthermore, the clothes treating apparatus 1a according to an embodiment may prevent water from the extension hose 75 from flowing back into the drain hose 74a and flowing into the drainage device 70a.

The washing machine 10 or 10a according to an embodiment may include the washing machine housing 11 or 11a, the tub 20 or 20a provided inside the washing machine housing, and the drainage device 70 or 70a for draining water from the tub to the outside of the washing machine housing, and the drain guide 100 configured to guide water discharged from the drainage device. The drain guide may include the guide housing 101 including the guide inlet 111 and the guide outlet 121, the check valve 130 configured to allow water to flow from the guide inlet to the guide outlet, and to block the flow of water from the guide outlet to the guide inlet, and the air supply portion 128 for supplying air to the guide flow path P between the guide inlet and the guide outlet. The air supply portion may be located on the upper side of the check valve. According to such configurations, the washing machine 10 or 10a according to an embodiment may prevent draining by siphoning from the interior of the drain hose 74 or 74a and the extension hose 75 while the drainage devices 70 and 70a are not in operation. Furthermore, the washing machine 10 or 10a according to an embodiment may prevent water from the extension hose 75 from flowing back into the drain hose 74 or 74a and flowing into the drainage device 70 or 70a.

The air supply portion may be located closer to the guide outlet than the check valve.

The washing machine may further include the air guide 106 connecting the air supply portion and the tub.

The guide housing 101 may include the first guide housing 110 provided with the guide inlet portion 111, and the second guide housing 120 provided with the guide outlet 121 and couplable to the first guide housing 110.

The drain guide 100 may include the sealing member 140 configured to seal between the first guide housing 110 and the second guide housing 120.

The air supply portion 128 may be provided in the second guide housing 120.

The check valve 130 may include the valve body 131 secured to the guide housing 101, and the valve door 133 provided to open or close the guide flow path P.

The guide housing 101 may include the door support portion 113a that, when the valve door 133 is pressed by water flowing from the guide outlet 121 towards the guide inlet 111 while the valve door 133 is in a position closing the guide flow path P, supports the valve door 133 in a direction opposite to a direction in which the valve door 133 is pressed by the water.

The valve door 133 may include a border portion 133a supported by the door support portion 113a while the guide flow path P is in the closed position. The border portion 133a may have a convex shape in a direction protruding from the door support portion 113a.

The check valve 130 may be provided to cause the valve door 133 to open the guide flow path P by hydraulic pressure of water flowing from the guide inlet 111 to the guide outlet 121.

The guide housing 101 may be provided to form the space S for opening and closing the valve door 133.

The check valve 130 may include the connection portion 132 connecting the valve door 133 and the valve body 131, the connection portion 132 being deformable for opening or closing the valve door 133.

The check valve 130 may include a material that is more flexible than that of the guide housing 101.

The guide housing 101 may include the mounting portion 126 for mounting to the washing machine housing 11 or 11a.

The clothes treating apparatus 1 or 1a according an embodiment may include the washing machine 10 or 10a including the washing machine housing 11 or 11a, the tub 20 or 20a provided inside the washing machine housing, and a drainage device 70 or 70a for draining water from the tub to the outside of the washing machine housing, the filter device 1000 disposed outside the washing machine housing, the filter device 1000 configured to filter foreign substances from water discharged from the washing machine, and the drain guide 100 configured to guide water discharged from the drainage device to the filter device. The drain guide 100 may include the guide housing 101 including the guide inlet 111 and the guide outlet 121, the check valve 130 configured to allow water to flow from the guide inlet 111 to the guide outlet 121, and to block the flow of water from the guide outlet 121 to the guide inlet 111, and the air supply portion 128 configured to supply air to the guide flow path P between the guide inlet 111 and the guide outlet 121.

The air supply portion 128 may be located closer to the guide outlet 121 than the check valve 130.

The clothes treating apparatus may further include the air guide 106 connecting the air supply portion 128 and the tub 20 or 20a.

The check valve 130 may include the valve body 131 secured to the guide housing 101, the valve door 133 provided to open or close the guide flow path P, and the connection portion 132 connecting the valve door 133 and the valve body 131, and the connection portion 132 may be deformable for opening or closing the valve door 133.

The guide housing 101 may include the door support portion 113a for supporting the valve door 133 in a direction opposite to a direction in which the valve door 133 is pressed by water flowing from the guide outlet 121 toward the guide inlet 111 while the valve door 133 is in a position closing the guide flow path P.

The guide housing 101 may include the first guide housing 110 provided with the guide inlet, and the second guide housing 120 provided with the guide outlet and couplable to the first guide housing. The drain guide 100 may include the sealing member 140 provided to seal between the first guide housing 110 and the second guide housing 120.

According to the spirit of the present disclosure, the washing machine and the clothes treating apparatus may include the drain guide including the air supply portion, thereby preventing unintentional draining by a siphon.

According to the spirit of the present disclosure, the washing machine and the clothes treating apparatus may include the drain guide including the check valve, thereby preventing water discharged from the drain hose from flowing back into the washing machine.

The effects to be obtained from the disclosure are not limited to the effects those mentioned above, and other effects not mentioned will be apparent to be a person skilled in the art to which the disclosure belongs from the following description.

While the present disclosure has been particularly described with reference to exemplary embodiments, it should be understood by those of skilled in the art that various changes in form and details may be made without departing from the spirit and scope of the present disclosure.

## Claims

1. A washing machine, comprising:
a washing machine housing;
a tub provided inside the washing machine housing;
a drainage device configured to drain water from the tub to an outside of the washing machine housing; and
a drain guide configured to guide water discharged from the drainage device;
wherein the drain guide comprises:
a guide housing including a guide inlet and a guide outlet,
a check valve configured to allow a flow of water from the guide inlet to the guide outlet, and to block a flow of water from the guide outlet to the guide inlet, and
an air supply portion configured to supply air to a guide flow path between the guide inlet and the guide outlet,
wherein the air supply portion is located on an upper side of the check valve.

2. The washing machine of claim 1, wherein the air supply portion is located closer to the guide outlet than the check valve.

3. The washing machine of claim 1, further comprising an air guide configured to connect the air supply portion and the tub.

4. The washing machine of claim 1, wherein the guide housing includes:
a first guide housing provided with the guide inlet, and
a second guide housing provided with the guide outlet and couplable to the first guide housing.

5. The washing machine of claim 4, wherein the drain guide further includes a sealing member configured to seal between the first guide housing and the second guide housing.

6. The washing machine of claim 4, wherein the air supply portion is arranged in the second guide housing.

7. The washing machine of claim 1, wherein the check valve includes:
a valve body secured to the guide housing, and
a valve door configured to open or close the guide flow path.

8. The washing machine of claim 7, wherein the guide housing includes a door support portion configured to, when the valve door is pressed by water flowing from the guide outlet towards the guide inlet while the valve door is in a position closing the guide flow path, support the valve door in a direction opposite to a direction in which the valve door is pressed by the water.

9. The washing machine of claim 8, wherein the valve door includes a border portion supported by the door support portion while the valve door is in the position closing the guide flow path, and
the border portion has a convex shape in a direction protruding from the door support portion.

10. The washing machine of claim 7, wherein the check valve is configured to cause the valve door to open the guide flow path by hydraulic pressure of water flowing from the guide inlet to the guide outlet.

11. The washing machine of claim 7, wherein the guide housing is provided to form a space for opening or closing the valve door.

12. The washing machine of claim 7, wherein the check valve includes a connection portion connecting the valve door and the valve body, the connection portion being deformable for opening or closing the valve door.

13. The washing machine of claim 1, wherein the check valve includes a material that is more flexible than that of the guide housing.

14. The washing machine of claim 1, wherein the guide housing includes a mounting portion for mounting the guide housing to the washing machine housing.

15. A clothes treating apparatus, comprising:
a washing machine including a washing machine housing, a tub provided inside the washing machine housing, and a drainage device for draining water from the tub to an outside of the washing machine housing;
a filter device disposed outside the washing machine housing, the filter device configured to filter out foreign substances from water discharged from the washing machine; and
a drain guide configured to guide water discharged from the drainage device to the filter device;
wherein the drain guide comprises:
a guide housing including a guide inlet and a guide outlet,
a check valve configured to allow a flow of water from the guide inlet to the guide outlet, and to block a flow of water from the guide outlet to the guide inlet, and
an air supply portion configured to supply air to a guide flow path between the guide inlet and the guide outlet.
